(19) Europäisches Patentamt
European Patent Office
Office européen des brevets

(11) EP 4 765 998 A1

(12) **EUROPEAN PATENT APPLICATION**
published in accordance with Art. 153(4) EPC

(43) Date of publication:
24.06.2026 Bulletin 2026/26

(21) Application number: 24864476.7

(22) Date of filing: 30.08.2024

(51) International Patent Classification (IPC):
*H04W 74/00* (2009.01)

(52) Cooperative Patent Classification (CPC):
H04B 7/185; H04W 74/00; H04W 74/0833

(86) International application number:
PCT/CN2024/115900

(87) International publication number:
WO 2025/055754 (20.03.2025 Gazette 2025/12)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 15.09.2023 CN 202311204315

(71) Applicant: HUAWEI TECHNOLOGIES CO., LTD.
Shenzhen 518129 (CN)

(72) Inventors:
• SHI, Meng
  Shenzhen, Guangdong 518129 (CN)
• DOU, Shengyue
  Shenzhen, Guangdong 518129 (CN)
• LIAO, Shuri
  Shenzhen, Guangdong 518129 (CN)
• ZHANG, Xiaoyu
  Shenzhen, Guangdong 518129 (CN)

(74) Representative: Thun, Clemens
Mitscherlich PartmbB
Karlstraße 7
80333 München (DE)

(54) **COMMUNICATION METHOD AND APPARATUS**

(57) A communication method and apparatus are provided. The method includes: receiving an SSB from a network device; determining a first search space based on the SSB, and receiving a first system message based on the first search space, where the first system message is used to configure random access-related information; and after sending a random access request, receiving a second system message, where the second system message is used to configure cell-related information, where a first coverage area of the first system message is greater than a second coverage area of the second system message, and/or a first antenna gain of the first system message is less than a second antenna gain of the second system message. According to the method, the first coverage area of the first system message received before random access is larger, so that more terminal devices in a cell obtain information required for random access. The second coverage area of the second system message received after random access is smaller and/or the second antenna gain of the second system message received after random access is larger, so that transmission performance is improved, and initial access performance is improved.

FIG. 5

**Description**

CROSS-REFERENCE TO RELATED APPLICATIONS

This application claims priority to Chinese Patent Application No. 202311204315.3, filed with the China National Intellectual Property Administration on September 15, 2023 and entitled "COMMUNICATION METHOD AND APPARATUS", which is incorporated herein by reference in its entirety.

TECHNICAL FIELD

This application relates to the field of communication technologies, and in particular, to a communication method and apparatus.

BACKGROUND

Non-terrestrial network (non-terrestrial network, NTN) communication is communication implemented via a non-terrestrial network device. An NTN system may include a satellite system and the like. Introducing the NTN communication to mobile network communication, for example, 5th generation (5th generation, 5G) communication can improve user experience. The NTN can provide communication services for an area that is difficult to be covered by a terrestrial network, such as an ocean, a forest, a desert, or a remote area. In addition, the NTN can enhance reliability of mobile communication, for example, provide more stable communication services for a user in a high-speed movement scenario such as a train or an airplane.

The satellite system is used as an example. Different from a terrestrial base station, a satellite moves at a higher speed and has a longer signal propagation distance relative to the ground. Consequently, a signal path loss of the satellite is greater. Therefore, to help the satellite serve as a base station to provide a communication service for a terminal device, how to overcome a signal path loss to improve coverage of a signal for communication between the terminal device and the satellite base station, how to ensure that the terminal stably completes initial access, and how to reduce access latency are urgent problems that need to be resolved currently.

SUMMARY

This application provides a communication method and apparatus, to improve initial access performance.

According to a first aspect, this application provides a communication method. The method is applicable to a scenario such as NTN communication. The method is performed by a terminal device or a module or a chip in a terminal device. Herein, an example in which the method is performed by the terminal device is used for description. In the method, a synchronization signal/physical broadcast channel block SSB is received from a network device; a first search space is determined based on the SSB, and a first system message is received based on the first search space, where the first system message is used to configure random access-related information; and after a random access request is sent, a second system message is received from the network device, where the second system message is used to configure cell-related information, and a resource corresponding to the random access request is determined based on the first system message. A first coverage area of the first system message is greater than a second coverage area of the second system message, and/or a first antenna gain of the first system message is less than a second antenna gain of the second system message.

According to the method, the first coverage area of the first system message received before the terminal device performs random access is larger, so that more terminal devices in a cell can obtain information required for random access. The second coverage area of the second system message received after the terminal device performs random access is smaller and/or the second antenna gain of the second system message received after the terminal device performs random access is larger, so that transmission performance of the second system message is improved, a success rate of demodulating the second system message is improved, and initial access performance is improved.

In a possible implementation, the second system message includes at least one of the following: physical uplink shared channel PUSCH resource configuration information; system information SI scheduling information; and cell selection information.

In a possible implementation, the first system message includes at least one of the following: random access channel occasion RO resource configuration information; second position information of the network device; uplink transmission common configuration; RACH common configuration information; downlink transmission common configuration; and SSB-related information, where the SSB-related information includes one or more of a quantity of SSBs, an SSB periodicity, and an SSB pattern.

In a possible implementation, before receiving the second system message, the method further includes: sending first position information of the terminal device to the network device.

In the foregoing method, the first position information is reported in a process of sending the random access request. Therefore, a network side can learn of the first position information in advance, and determine, as early as possible based on the first position information, a narrow beam used for communication with the terminal device, thereby improving a link budget and information transmission performance. In this way, performance of an initial access process is improved.

In a possible implementation, the second coverage area and/or the second antenna gain are/is determined based on the first position information.

In a possible implementation, the method further includes: receiving a random access response from the network device, where a coverage area of the random access response is the second coverage area, and/or an antenna gain of the random access response is the second antenna gain.

In a possible implementation, the method further includes: sending a message 3 to the network device; and receiving a message 4 from the network device, where a coverage area of the message 4 is the second coverage area, and/or an antenna gain of the message 4 is the second antenna gain.

In a possible implementation, a start position of the first search space for the first system message in time domain is preset or predefined.

In a possible implementation, a correspondence exists between a start position of the first search space for the first system message in time domain and an index of the SSB.

In a possible implementation, a data transmission bandwidth of the first system message is less than 20 resource blocks.

In the foregoing method, the first system message may be transmitted by using a small bandwidth. In this way, transmission performance of the first system message can be further improved through power aggregation.

In a possible implementation, a channel coding rate of the first system message is greater than 0 and less than 0.2344.

In the foregoing method, the first system message may support transmission at a low channel coding rate, thereby improving coverage performance.

According to a second aspect, this application provides a communication method. The method is applicable to a scenario such as NTN communication. The method is performed by a network device or a module or a chip in a network device. Herein, an example in which the method is performed by the network device is used for description. In the method, a synchronization signal/physical broadcast channel block SSB is sent, where the SSB indicates a first search space for a first system message; the first system message is sent in the first search space, where the first system message is used to configure random access--related information; and after a random access request from a terminal device is received, a second system message is sent to the terminal device, where the second system message is used to configure cell-related information, and a resource corresponding to the random access request is determined based on the first system message. A first coverage area of the first system message is greater than a second coverage area of the second system message, and/or a first antenna gain of the first system message is less than a second antenna gain of the second system message.

In a possible implementation, the second system message includes at least one of the following: physical uplink shared channel PUSCH resource configuration information; system information SI scheduling information; and cell selection information.

In a possible implementation, the first system message includes at least one of the following: random access channel occasion RO resource configuration information; second position information of the network device; uplink transmission common configuration; RACH common configuration information; downlink transmission common configuration; and SSB-related information, where the SSB-related information includes one or more of a quantity of SSBs, an SSB periodicity, and an SSB pattern.

In a possible implementation, before sending the second system message, the method further includes: receiving first position information from the terminal device.

In a possible implementation, before sending the second system message, the method further includes: positioning the terminal device based on the random access request, to determine the first position information of the terminal device.

In a possible implementation, the second coverage area and/or the second antenna gain are/is determined based on the first position information.

In a possible implementation, the method further includes: sending a random access response to the terminal device, where a coverage area of the random access response is the second coverage area, and/or an antenna gain of the random access response is the second antenna gain.

In a possible implementation, the method further includes: receiving a message 3 from the terminal device; and sending a message 4 to the terminal device, where a coverage area of the message 4 is the second coverage area, and/or an antenna gain of the message 4 is the second antenna gain.

In a possible implementation, a start position of the first search space for the first system message in time domain is preset or predefined.

In a possible implementation, a correspondence exists between a start position of the first search space for the first system message in time domain and an index of the SSB.

In a possible implementation, a data transmission bandwidth of the first system message is less than 20 resource blocks.

In a possible implementation, a channel coding rate of the first system message is greater than 0 and less than 0.2344.

According to a third aspect, this application provides a communication method. The method is applicable to a scenario such as NTN communication. The method is performed by a terminal device or a module or a chip in a terminal device. Herein, an example in which the method is performed by the terminal device is used for description. In the method, a synchronization signal/physical broadcast channel block SSB is received from a network device, where the SSB includes a first system message, and the first system message is used to configure random access-related information; and after a random access request is sent, a second system message is received from the network device, where the second system message is used to configure cell-related information, and a resource corresponding to the random access request is determined based on the first system message. A first coverage area of the SSB is greater than a second coverage area of the second system message, and/or a first antenna gain of the SSB is less than a second antenna gain of the second system message.

According to the method, the first system message is transmitted through the SSB, so that the first coverage area of the first system message is large, and more terminal devices in a cell can obtain information required for random access. The second coverage area of the second system message received after the terminal device performs random access is smaller and/or the second antenna gain of the second system message received after the terminal device performs random access is larger, so that transmission performance of the second system message is improved, a success rate of demodulating the second system message is improved, and initial access performance is improved.

According to a fourth aspect, this application provides a communication method. The method is applicable to a scenario such as NTN communication. The method is performed by a network device or a module or a chip in a network device. Herein, an example in which the method is performed by the network device is used for description. In the method, a synchronization signal/physical broadcast channel block SSB is sent, where the SSB includes a first system message, and the first system message is used to configure random access-related information; and after a random access request is received from a terminal device, a second system message is sent to the terminal device, where the second system message is used to configure cell-related information, and a resource corresponding to the random access request is determined based on the first system message. A first coverage area of the first system message is greater than a second coverage area of the second system message, and/or a first antenna gain of the first system message is less than a second antenna gain of the second system message.

According to a fifth aspect, this application further provides a communication apparatus. The communication apparatus can implement any method provided in any one of the first aspect to the fourth aspect. The communication apparatus may be implemented by hardware, or may be implemented by hardware executing corresponding software. The hardware or the software includes one or more units or modules corresponding to the foregoing function.

In a possible implementation, the communication apparatus includes a processor. The processor is configured to support the communication apparatus in performing a corresponding function of the network device, the terminal device, or a core network device in the foregoing method. The communication apparatus may further include a memory. The memory may be coupled to the processor, and the memory stores program instructions and data that are necessary for the communication apparatus. Optionally, the communication apparatus further includes an interface circuit. The interface circuit is configured to support communication between the communication apparatus and a device like a terminal apparatus.

In a possible implementation, the communication apparatus includes corresponding functional modules, respectively configured to implement the steps in the foregoing method. The function may be implemented by hardware, or may be implemented by hardware executing corresponding software. The hardware or the software includes one or more modules corresponding to the foregoing function.

In a possible implementation, a structure of the communication apparatus includes a processing unit and a communication unit. These units may perform corresponding functions in the foregoing method examples. For details, refer to descriptions in the method provided in any one of the first aspect to the fourth aspect. Details are not described herein.

According to a sixth aspect, a computer-readable storage medium is provided. The computer-readable storage medium stores a computer program or instructions. When the computer program or the instructions are executed by a processor, the method in any possible implementation of any one of the first aspect to the fourth aspect is implemented.

According to a seventh aspect, a computer program product storing instructions is provided. When a computer reads and executes the computer program product, the method in any possible implementation of any one of the first aspect to the fourth aspect is implemented.

According to an eighth aspect, a circuit is provided. The circuit is configured to perform the method in any possible implementation of any one of the first aspect to the fourth aspect, and the circuit may include a chip circuit. Optionally, the circuit may be further coupled to a memory.

According to a ninth aspect, a chip is provided. The chip includes a processor. When executing a computer program or instructions, the processor is configured to implement the method in any possible implementation of any one of the first aspect to the fourth aspect. Optionally, the chip may further include a memory. The chip may include a chip, or may include a chip and another discrete device.

According to a tenth aspect, a communication apparatus is provided, and includes a processor. The processor implements the method in any possible implementation of any one of the first aspect to the fourth aspect by using a logic circuit or by executing a computer program or instructions.

According to an eleventh aspect, a communication apparatus is provided, and includes a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement a functional module of the method in any possible implementation of any one of the first aspect to the fourth aspect by using a logic circuit or by executing a computer program or instructions. Optionally, the communication apparatus further includes a memory, and the memory is configured to store a computer program or instructions.

According to a twelfth aspect, a communication apparatus is provided, and includes a unit or a module configured to perform the method in any possible implementation of any one of the first aspect to the fourth aspect.

According to a thirteenth aspect, an embodiment of this application further provides a communication system. The communication system includes: a terminal device configured to implement the method in the first aspect and any possible implementation of the first aspect; and a network device configured to implement the method in the second aspect and any possible implementation of the second aspect.

Alternatively, the communication system includes: a terminal device configured to implement the method in the third aspect and any possible implementation of the third aspect; and a network device configured to implement the method in the fourth aspect and any possible implementation of the fourth aspect.

BRIEF DESCRIPTION OF DRAWINGS

FIG. 1 is a diagram of an architecture of a communication system to which an embodiment of this application is applied;

FIG. 2 is a diagram of a network architecture according to an embodiment of this application;

FIG. 3 is a diagram of a network architecture according to an embodiment of this application;

FIG. 4 is a diagram of a network architecture according to an embodiment of this application;

FIG. 5 is a schematic flowchart of a communication method according to an embodiment of this application;

FIG. 6 is a diagram of an SSB signal coverage pattern according to an embodiment of this application;

FIG. 7 is a diagram of a coverage area according to an embodiment of this application;

FIG. 8 is a schematic flowchart of a communication method according to an embodiment of this application;

FIG. 9 is a diagram of a structure of a communication apparatus according to an embodiment of this application;

FIG. 10 is a diagram of a structure of a communication apparatus according to an embodiment of this application; and

FIG. 11 is a diagram of a structure of a communication apparatus according to an embodiment of this application.

DESCRIPTION OF EMBODIMENTS

A method provided in embodiments of this application may be applied to an NTN communication scenario. NTN communication may include networking by using a non-terrestrial network device, for example, an unmanned aerial vehicle, a high altitude platform station (high altitude platform station, HAPS), or a satellite, to provide services such as data transmission and voice communication for a terminal device. In addition, an NTN system may further include another non-terrestrial network device. This is not limited in this application. The NTN system may further support various mobile communication systems, for example, another communication system like a new radio (new radio, NR) system, a long term evolution (long term evolution, LTE) system, or a future communication system. This is not specifically limited herein.

The method provided in embodiments of this application may be applied to long term evolution (long term evolution, LTE) or a 5th generation (5th generation, 5G) communication system, for example, 5G new radio (new radio, NR), or may be applied to various future communication systems, for example, a 6th generation (6th generation, 6G) communication system. A communication method provided in embodiments of this application may be further applied to fields such as vehicle-to-everything (vehicle-to-everything, V2X) communication, the internet of vehicles, self-driving, and assisted driving.

The method and an apparatus provided in embodiments of this application are based on a same or similar technical concept. Because problem resolving principles of the method and the apparatus are similar, mutual reference may be made to implementations of the apparatus and the method. Repeated descriptions are not described.

For ease of understanding embodiments of this application, before embodiments of this application are described, the following several descriptions are first provided.

Definitions listed for many features in this application are merely used to explain functions of the features by using examples. For detailed content of the definitions, refer to a conventional technology.

In the following embodiments, first, second, third, fourth, and various numbers are merely used for differentiation for ease of description, but are not used to limit the scope of embodiments of this application. For example, used for differentiation between different fields and different information.

"Predefinition" may be implemented by prestoring corresponding code or a corresponding table in a device, or may be implemented in another manner in which related information may be indicated. A specific implementation of the "predefinition" is not limited in this application. "Storage" may be storage in one or more memories. A type of the memory may be a storage medium in any form. This is not limited in this application.

A "protocol" in embodiments of this application may be a standard protocol in the communication field, for example, may include a long term evolution (long term evolution, LTE) protocol, a new radio (new radio, NR) protocol, and a related protocol applied to a future communication system. This is not limited in this application.

Each aspect, embodiment, or feature is presented in this application with reference to a system including a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may also be used.

In embodiments of this application, words such as "example", "for example", and "in an (another) example" are used to represent giving an example, an illustration, or a description. Any embodiment or design scheme described as an "example" in this application should not be explained as being more preferred or having more advantages than another embodiment or design scheme. Exactly, the word "example" is used to present a concept in a specific manner.

"At least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. The character "/" generally represents an "or" relationship between the associated objects. "At least one of the following items (pieces)" or a similar expression thereof represents any combination of these items, including a single item (piece) or any combination of a plurality of items (pieces). For example, at least one item (piece) of a, b, and c may represent a, b, c, a and b, a and c, b and c, or a, b, and c. Each of a, b, and c may be in a singular form or a plural form.

For ease of understanding, a communication system to which an embodiment of this application may be applied is first described.

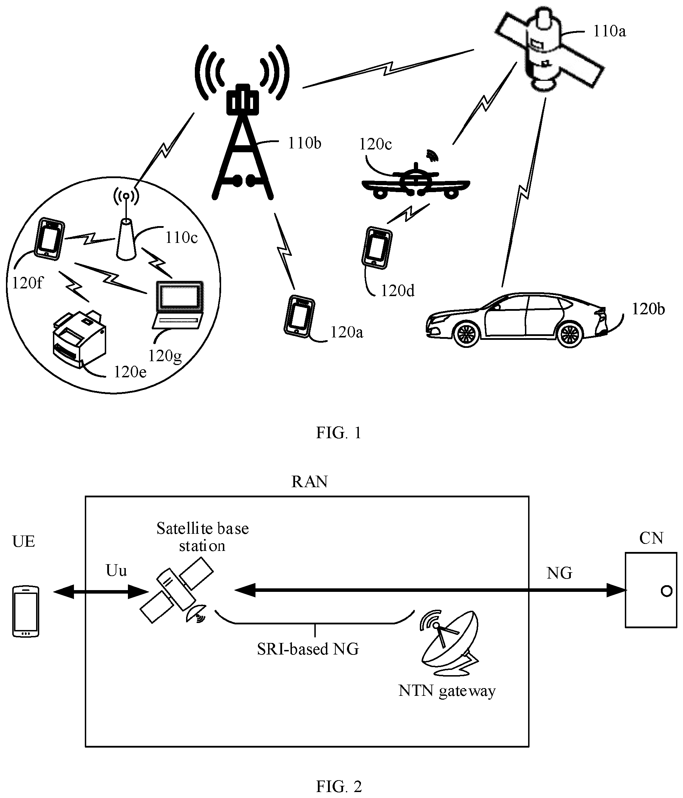

For example, FIG. 1 and FIG. 2 show communication systems to which embodiments of this application may be applied.

FIG. 1 is a diagram of a communication system to which an embodiment of this application may be applied.

As shown in FIG. 1, the communication system may include at least one network device (for example, 110a, 110b, and 110c in FIG. 1), and may further include at least one terminal device (for example, 120a to 120g in FIG. 1). The terminal device may be mobile or fixed. Each network device may provide communication coverage for a specific geographical area, and may communicate with a terminal located in the coverage area. Network devices, a network device and a terminal device, and terminal devices may be connected to each other in a wired or wireless manner. FIG. 1 is merely a diagram. The communication system may further include another device, for example, may further include a wireless relay device and a wireless backhaul device.

Embodiments of this application are applicable to a communication system that integrates a terrestrial communication system and a satellite communication system. The communication system may also be referred to as a non-terrestrial network (non-terrestrial network, NTN) communication system.

The terrestrial communication system may be, for example, an LTE system, a universal mobile telecommunications system (universal mobile telecommunications system, UMTS), a 5G system or an NR system, or a communication system that is to be developed from a 5G system. This is not limited herein.

Compared with a conventional communication system, the satellite communication system has a wider coverage area, and can overcome natural geographical obstacles such as oceans, deserts, and mountains. To overcome shortcomings of the conventional communication system, the satellite communication system can be used as an effective supplement to the conventional communication system. Based on different orbital altitudes, satellite communication systems can be classified into the following three types: a geostationary earth orbit (geostationary earth orbit, GEO) satellite communication system, a medium earth orbit (medium earth orbit, MEO) satellite communication system, and a low earth orbit (low earth orbit, LEO) satellite communication system. The GEO satellite communication system may also be referred to as a synchronous orbit satellite system.

A GEO satellite, commonly also referred to as a geostationary orbit satellite, may have an orbital altitude of 35,786 kilometers (km). A main advantage of the GEO satellite is that the GEO satellite is stationary relative to the ground and provides a large coverage area. However, the GEO satellite also has obvious disadvantages. For example, if the GEO satellite is at an extremely long distance from the earth, a large-diameter antenna is required. For another example, the GEO satellite has long transmission latency that is about 0.5 seconds, and cannot satisfy a requirement of a real-time service. For still another example, the GEO satellite has limited orbit resources, high transmission costs, and cannot provide coverage for polar areas. An MEO satellite has an orbit altitude of 2,000 km to 35,786 km, and a small quantity of MEO satellites can implement global coverage. However, the MEO satellite has longer transmission latency than a LEO satellite and is mainly used for positioning and navigation. The LEO satellite has an orbit altitude of 300 km to 2,000 km. Compared with the MEO and GEO satellites, the LEO satellite has a lower orbit altitude, shorter data propagation latency, a smaller power loss, and lower transmission costs. Therefore, the LEO satellite communication system has made great progress in recent years.

It is generally considered that an NTN has different channel characteristics (for example, large transmission latency and large Doppler shift) compared with terrestrial communication. For example, round-trip latency of the GEO satellite communication system is 238 milliseconds to 270 milliseconds (ms), and round-trip latency of the LEO satellite communication system is 8 ms to 20 ms.

Operating modes of a satellite can be classified into a transparent (transparent) mode and a regenerative (regenerative) mode. When the satellite operates in the transparent mode, the satellite has a relay and forwarding function. A gateway has functions or some functions of a base station. In this case, the gateway may be considered as a base station. When the satellite operates in the regenerative mode, the satellite has a data processing capability and has functions or some functions of a base station. In this case, the satellite may be considered as a base station.

FIG. 2 is a diagram of an NTN in a regenerative mode. As shown in FIG. 2, a satellite has a part or all functions of a base station, and may be referred to as a satellite base station. The satellite base station may provide a radio access service, and schedule a radio resource for a terminal device that accesses a network through the satellite base station. The satellite base station may communicate with the terminal through a universal terrestrial radio access network-user (universal terrestrial radio access network-user, Uu) interface. The satellite base station and a core network (core network, CN) may communicate with each other through a next generation (next generation, NG) network interface, and the satellite base station and the core network may exchange non-access stratum (non-access stratum, NAS) signaling of the core network and service data of a user through the NG interface. A satellite radio interface (satellite radio interface, SRI) interface is a feeder link between an NTN gateway and the satellite. In FIG. 2, the SRI interface may be used as a part of the next generation (next generation, NG) network interface to implement communication interaction between the satellite base station and the core network.

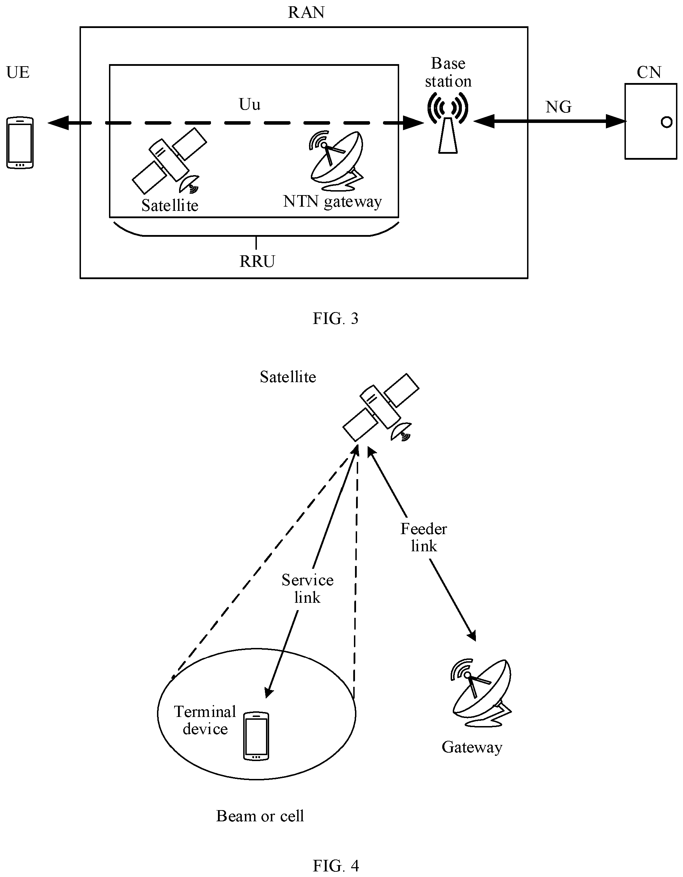

FIG. 3 is a diagram of another network architecture applicable to this application. As shown in FIG. 3, a terminal device communicates with a terrestrial base station through a Uu interface. A satellite may implement transparent payload transmission between the terminal device and the terrestrial base station. The satellite and an NTN gateway may be considered as remote radio units (remote radio unit, RRU) of the terrestrial base station, to implement transparent forwarding of a signal. In other words, the satellite supports functions such as radio frequency filtering, frequency conversion, and amplification, and a signal waveform remains unchanged. Forwarding by the satellite is transparent to the terminal device. The terrestrial base station and a CN may communicate with each other through an NG interface, and exchange NAS signaling of the core network and service data of the terminal device through the NG interface.

FIG. 4 is a diagram of a satellite communication scenario. As shown in FIG. 4, network devices in the satellite communication scenario include a satellite and a gateway (gateway). A terminal device includes an Internet of Things terminal, a mobile phone mobile terminal, a high-altitude aircraft, and the like. The terminal device may alternatively be a terminal device in another form and with another performance, or the like. This is not limited herein. A link between the satellite and the terminal device is referred to as a service link (service link), and a link between the satellite and the gateway is referred to as a feeder link (feeder link). The gateway may also be referred to as a gateway station. It should be noted that embodiments of this application may also be applied to a satellite communication scenario obtained through extension performed based on FIG. 3.

The terminal device in embodiments of this application is a device that can access a wireless communication network. The terminal and the network device may communicate with each other through an air interface technology (for example, NR or LTE). Terminals may also communicate with each other through an air interface technology (for example, NR or LTE). The terminal device may also be referred to as user equipment (user equipment, UE), a terminal, a user, an access terminal, a subscriber unit, a subscriber station, a mobile station, a remote station, a remote terminal, a mobile device, a user terminal, a wireless communication device, a user agent, a user apparatus, or the like. For ease of description, these names are collectively referred to as a terminal device below. The terminal device may be widely used in various scenarios, for example, enhanced mobile broadband (enhanced mobile broadband, eMBB), ultra-reliable low-latency communication (ultra-reliable low-latency communication, URLLC), massive machine-type communications (massive machine-type communications, mMTC), D2D, V2X, MTC, IoT, virtual reality, augmented reality, industrial control, self-driving, telemedicine, smart grid, smart furniture, smart office, smart wearable, smart transportation, or smart city. The terminal device may be a mobile phone (for example, 120a, 120d, and 120f in FIG. 1), a tablet computer, a computer (for example, a computer 120g in FIG. 1) having a wireless transceiver function, a wearable device, a vehicle (for example, 120b in FIG. 1), an unmanned aerial vehicle, a helicopter, an airplane (for example, 120c in FIG. 1), a ship, a robot, a mechanical arm, a smart home device (for example, a printer 120e in FIG. 1), or the like. A specific technology and a specific device form that are used for the terminal device are not limited in this application.

The network device in embodiments of this application may be a device configured to communicate with a terminal device, or may be a device that enables the terminal device to access a wireless communication network. The network device may be a base station (base station), a NodeB (NodeB), an evolved NodeB (evolved NodeB, eNodeB, or eNB), a transmission reception point (transmission reception point, TRP), a next-generation NodeB (next-generation NodeB, gNB) in a 5G system, an access network device in an open radio access network (open radio access network, O-RAN, or open RAN), a next generation base station in a 6G system, a satellite base station in an NTN (for example, the satellite base station in FIG. 2), a base station in a future mobile communication system, an access node in a wireless fidelity (wireless fidelity, Wi-Fi) system, or the like. Alternatively, the network device may be a module or a unit that completes some functions of the base station, for example, may be a central unit (central unit, CU), a distributed unit (distributed unit, DU), a central unit-control plane (CU control plane, CU-CP) module, or a central unit-user plane (CU user plane, CU-UP) module. The network device may be a macro base station (for example, 110b in FIG. 1), may be a micro base station or an indoor base station (for example, 110c in FIG. 1), or may be a relay node, a donor node, or the like. A specific technology and a specific device form that are used for the network device are not limited in this application.

In an implementation, the network device includes but is not limited to: a base station (base station), an evolved NodeB (evolved NodeB, eNodeB), a transmission reception point, a next generation NodeB (next generation NodeB, gNB) in a 5G mobile communication system, an access network device in an open radio access network (O-RAN), a next generation base station in a 6th generation (6th generation, 6G) mobile communication system, a base station in a future mobile communication system, an access node in a wireless fidelity (wireless fidelity, Wi-Fi) system, or the like. Alternatively, the network device may be a module or a unit that completes some functions of the base station, for example, may be a central unit (central unit, CU), a distributed unit (distributed unit, DU), a central unit-control plane (CU control plane, CU-CP) module, or a central unit-user plane (CU user plane, CU-UP) module.

In some deployments, the network device may include a central unit (central unit, CU) and a distributed unit (distributed unit, DU). A RAN device including a CU node and a DU node splits protocol layers of a gNB in an NR system. Functions of some protocol layers are centrally controlled by the CU. Functions of a part or all remaining protocol layers are distributed in the DU, and the CU centrally controls the DU. Further, the CU may be further divided into a control plane (CU-CP) and a user plane (CU-UP). The CU-CP is responsible for a control plane function, mainly including radio resource control (radio resource control, RRC) and a packet data convergence protocol (packet data convergence protocol, PDCP) corresponding to the control plane (namely, PDCP-C). The PDCP-C is mainly responsible for data encryption and decryption, integrity protection, data transmission, and the like on the control plane. The CU-UP is responsible for a user plane function, mainly including a service data adaptation protocol (service data adaptation protocol, SDAP) and a PDCP corresponding to the user plane (namely, PDCP-U). The SDAP is mainly responsible for processing data of a core network and mapping a flow (flow) to a bearer. The PDCP-U is mainly responsible for encryption and decryption, integrity protection, header compression, serial number maintenance, data transmission, and the like on a data plane. The CU-CP and the CU-UP are connected through an E1 interface. The CU-CP, on behalf of the gNB, is connected to the core network through an NG interface and connected to the DU through an F1 interface-control plane (namely, F1-C). The CU-UP is connected to the DU through an F1 interface-user plane (namely, F1-U). Certainly, in another possible implementation, the PDCP-C is alternatively in the CU-UP.

It may be understood that, in different systems, the CU (including the CU-CP or the CU-UP) or the DU may alternatively have different names, but a person skilled in the art can understand meanings of the names. For example, in an open radio access network (open radio access network, O-RAN) system, the CU may also be referred to as an O-CU (open CU), the DU may also be referred to as an O-DU, the CU-CP may also be referred to as an O-CU-CP, and the CU-UP may also be referred to as an O-CU-UP. For ease of description, the CU, the CU-CP, the CU-UP, and the DU are used as examples for description in this application. The network device may further include an active antenna unit (active antenna unit, AAU). The CU implements some functions of the gNB, and the DU implements some functions of the gNB. For example, the CU is responsible for processing a non-real-time protocol and a service, to implement functions of an RRC layer. The DU is responsible for processing a physical layer protocol and a real-time service, to implement functions of a radio link control (radio link control, RLC) layer, a media access control (media access control, MAC) layer, and a physical (physical, PHY) layer. In some deployments, the CU may be further divided into a central unit-control plane (CU-CP) node and a central unit-user plane (CU-UP) node. The CU-CP is responsible for a control plane function, and the CU-UP is responsible for a user plane function.

The network device and/or the terminal device may be at fixed positions, or may be movable. The network device and/or the terminal device may be deployed on land, including an indoor or outdoor device, or a handheld or vehicle-mounted device, or may be deployed on water, or may be deployed on an airplane, a balloon, and an artificial satellite in the air. An environment/scenario at which the network device and the terminal device are located is not limited in this application.

It should be understood that the network architecture shown above is merely an example for description, and the network architecture applicable to embodiments of this application is not limited thereto. Any network architecture that can implement functions of the network elements is applicable to embodiments of this application.

Considering that a satellite has advantages such as being less susceptible to natural disasters or external damage, research on using the satellite as a network device (such as a base station) of a mobile communication system is underway, to provide communication services for areas such as oceans and forests. Different from a terrestrial network device, the satellite moves at a higher speed and has a longer signal propagation distance relative to the ground. Consequently, a signal path loss is greater when the satellite serves as the network device. In addition, due to high-speed movement of the satellite, coverage and service time of a single satellite and each beam under the single satellite are limited. Therefore, the communication scenario imposes a higher requirement on access latency of the terminal.

In an initial access phase, as a network device, the satellite needs to sequentially send a plurality of beams, to configure random access resources for the terminal device. A random access procedure is generally a process from sending of a random access preamble (random access preamble, which may be referred to as a preamble for short) by a terminal device for starting to attempt to access a network device to establishment of a basic signaling connection between the terminal device and the network device. Currently, the network device may broadcast different synchronization signal/physical broadcast channel blocks (synchronization signal/physical broadcast channel block, SS/PBCH block or SSB) for different communication areas, and distinguish between the synchronization signal/physical broadcast channel blocks through indexes (index) of the SSBs. Generally, different SSB indexes represent that downlink synchronization signals in different beam directions cover and serve different areas. After receiving an SSB, the terminal device completes timing synchronization, determines a time-frequency position of a SIB 1 based on information in the SSB, and further completes parsing of the SIB 1, to obtain system information that is of a cell and that is carried in the SIB 1. The terminal device detects a SIB 19 based on a search space that is of the SIB 19 and that is configured in the SIB 1, and completes data parsing of the SIB 19, to obtain ephemeris information that is of a satellite and that is carried in the SIB 19. After obtaining the system information of the cell and the ephemeris information, the terminal device sends a random access preamble on a corresponding uplink resource based on configuration information and an SSB index. The network device may determine, through the received random access preamble and the corresponding uplink resource, an area in which the terminal device is located, and establish a connection to the terminal device.

However, because a coverage area of a satellite beam is large and a transmission distance of a signal is long, a path loss of the signal is large. Information received by the terminal device in an initial access process, for example, information (for example, including a SIB 1, a random access response, and a message 4) on a physical downlink shared channel (physical downlink shared channel, PDSCH) and information (for example, including scheduling information of a scheduling SIB 1, a random access response, and a message 4) on a physical downlink control channel (physical downlink control channel, PDCCH) has a high demodulation threshold. As a result, the terminal device cannot accurately demodulate the information such as the SIB 1, the random access response, and the message 4. Consequently, latency in the initial access process is long, and communication efficiency is reduced.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With evolution of the network architecture and emergence of new service scenarios, the technical solutions provided in embodiments of this application are also applicable to similar technical problems.

When the method provided in this application is applied to the systems in FIG. 1 to FIG. 4, the terminal device or the module in the terminal device in FIG. 1 to FIG. 4 may implement the method performed by the terminal device in embodiments of this application, the network device or the module in the network device in FIG. 1 to FIG. 4 may implement the method performed by the network device in embodiments of this application, or the satellite or a module in the satellite in FIG. 1 to FIG. 4 may implement the method performed by the network device in embodiments of this application.

It may be understood that a specific structure of an execution body of the method provided in embodiments of this application is not particularly limited in this application. The method performed by the terminal device may be applied to the terminal device or the module or a chip in the terminal device, and the method performed by the network device may be applied to the network device or the module or a chip in the network device, provided that a program that records code of the method provided in embodiments of this application can be run to perform communication according to the method provided in embodiments of this application. The following uses interaction between the terminal device and the network device as an example for description.

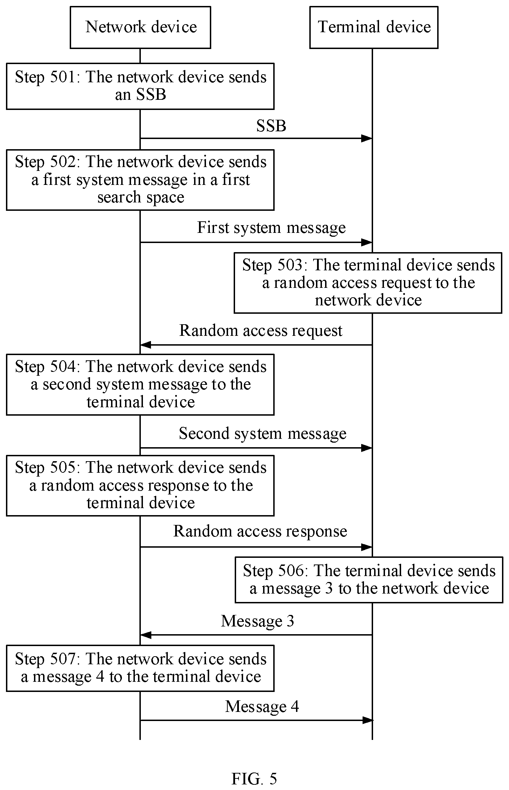

FIG. 5 is a schematic flowchart of a communication method according to an embodiment of this application. The method includes the following steps.

Step 501: A network device sends an SSB.

Correspondingly, a terminal device receives the SSB.

In this application, the network device may send the SSB by using a wide beam, where a coverage area of the SSB may be a first coverage area, and an antenna gain of the SSB may be a first antenna gain.

When the network device is a satellite or a terrestrial base station with ultra-wide coverage, a signal coverage area of the network device is large, and may reach an ultra-large coverage area of dozens of kilometers. With a given link budget and a given system resource, the network device may send the SSB a plurality of times by using a plurality of beams, so that all terminal devices within a signal coverage area of the network device can receive SSBs.

The network device may send Q SSBs in each SSB periodicity based on an SSB signal coverage pattern (which may also be referred to as an SSB coverage pattern or an SSB scanning pattern), where Q is an integer greater than 1. The Q SSBs may be distinguished through indexes (index) of the SSBs. The network device may broadcast SSBs with different indexes in different areas. It may be understood as that the SSBs with different indexes represent that downlink synchronization signals in different beam directions cover and serve different areas. Each SSB may indicate one piece of first system information, and content included in first system information indicated by SSBs with different indexes is the same. A value of Q is not limited. For example, the value of Q may be a power of 2. For example, Q is one of the following: 4, 8, 16, 32, 64, 128, 256, 512, 1024, and other values. The value of Q may be agreed on or predefined, and the network device may indicate the value of Q to the terminal device.

The SSB signal coverage pattern includes coverage areas of the Q SSBs, and the SSB signal coverage patterns may be defined in different shapes, for example, may be a rectangle, a square, and other shapes. When the SSB signal coverage pattern is a square, each row of the SSB signal coverage pattern includes coverage areas of G SSBs, and each column of the SSB signal coverage pattern includes coverage areas of G SSBs. When the SSB signal coverage pattern is a rectangle, each row of the SSB signal coverage pattern includes coverage areas of H SSBs, and each column of the SSB signal coverage pattern includes coverage areas of J SSBs.

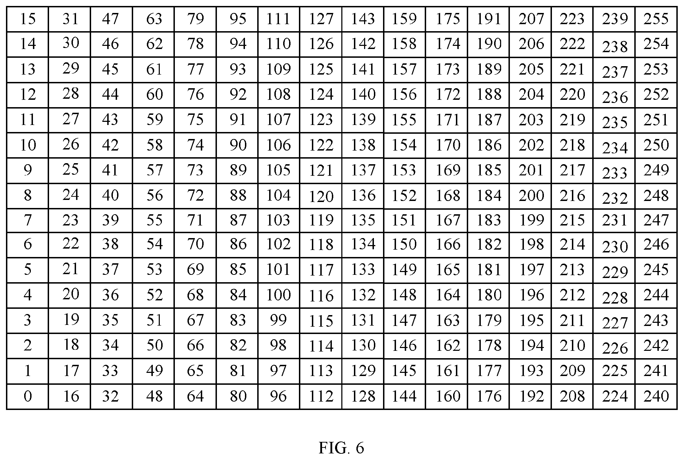

For example, Q=256. As shown in FIG. 6, the network device sends 256 SSBs by using 256 beams, and a coverage area corresponding to each beam is a small grid in the figure. In the SSB signal coverage pattern shown in the figure, each row includes coverage areas of G=16 beams, and each column includes coverage areas of G=16 beams. A number in each grid represents an index of an SSB sent by using a beam. Indexes of SSBs are numbered from 0, and a largest index is 255. Starting from a 1st column on the left, indexes of 16 SSBs from bottom to top in the 1st column are 0 to 15, and indexes of 16 SSBs from bottom to top in a 2nd column are 16 to 31. Cases of other columns can be deduced by analogy. For details, refer to the figure.

A beam is a main lobe of a signal direction array diagram. A coverage area of a beam may be a projection range of the beam on a ground surface. The network device may adjust a weight of an antenna, so that the beam points to different directions, has different coverage areas, and has different antenna gains.

One terminal device may receive a plurality of SSBs, and the terminal device may use an SSB with optimal signal quality in the plurality of received SSBs as an SSB used to determine the first system information. The signal quality may be reference signal received quality (reference signal received quality, RSRQ), reference signal received power (reference signal received power, RSRP), a signal to interference plus noise ratio (signal to interference plus noise ratio, SINR), or the like.

The SSB includes a primary synchronization signal (primary synchronization signal, PSS), a secondary synchronization signal (secondary synchronization signal, SSS), and a physical broadcast channel block (physical broadcast channel block, PBCH). The PSS and the SSS may be used for time-frequency synchronization between the terminal device and a cell, and the PBCH is used to carry information such as a master information block (master information block, MIB) and an additional payload of the PBCH.

In this application, the SSB may further indicate that a correspondence exists between a first search space for the first system message and an index of the SSB. For example, a correspondence exists between a start position of the first search space for the first system message in time domain and the index of the SSB.

For example, a start slot $n_0$ of the first search space in time domain and an index i of the SSB satisfy the following form:

$$ n_0 = (O * 2^u + \lfloor i * M \rfloor) \bmod N_{\text{slot}}^{\text{frame},u} $$

i is the index of the SSB. $\mu$ is used to determine a subcarrier spacing. O represents an offset of a control resource set (control resource set, CORESET) #0 corresponding to an SSB whose index is 0 relative to a start position of a system frame in which the SSB #0 (that is, the SSB whose index is 0) is located, and is represented by milliseconds (ms). Because 1 ms includes $2^u$ slots, O * $2^u$ represents a quantity of slots included in O ms.

M is an interval between search spaces of CORESETs #0 corresponding to two consecutively sent SSBs, and is represented by slots (slot); and $N_{slot}^{frame,u}$ represents a quantity of slots in one system frame. $\lfloor \ \rfloor$ represents rounding down to the nearest integer, and mod is a modulo operator.

For another example, a spacing between the SSB and the first search space may be defined as Y, where Y is an integer greater than 0. Assuming that the index of the SSB is 0, and a start slot of the SSB is S0, the start slot of the first search space is S0+1*Y. If the index of the SSB is 1, and a start slot of the SSB is S1, the start slot of the first search space is S1+1*Y.

In another implementation, a start position of a first search space for the first system message in time domain is preset or predefined. Specifically, the first search space may be defined as being placed at a fixed time-frequency position. For example, fixed last A symbols of one slot are the first search space. A is preset or predefined, and A is an integer greater than 0 and less than 14.

In this application, the first system message is used to configure random access-related information. The first system message may be referred to as cell-level system information. Because the first system message carries random access-related information required by the terminal device to initiate random access, an amount of carried information is reduced, and transmission performance can be improved.

In an implementation, the first system message may include a part of information of a SIB 1 and a part of information of a SIB 19. For example, the first system message includes at least one of the following:

random access channel occasion (random access channel occasion, RO) resource configuration information;

second position information of the network device, for example, the second position information may be ephemeris information;

uplink transmission common configuration, including an uplink configuration common SIB (uplinkConfigCommonSIB) or bandwidth part (bandwidth part, BWP) uplink common (BWP-UplinkCommon);

random access channel occasion (random access channel, RACH) common configuration information (rach-ConfigCommon);

downlink transmission common configuration, including a downlink configuration common SIB (DownlinkConfigCommonSIB) or BWP downlink common (BWP-DownlinkCommon); and

SSB-related information, including at least one of the following information: a quantity of SSBs, an SSB periodicity, and an SSB pattern (pattern). The SSB pattern may also be referred to as an SSB mode or an SSB pattern.

Specific meanings and functions of the foregoing information is not limited in this application. For example, refer to related documents of the 3rd Generation Partnership Project (the 3rd generation partnership project, 3GPP). Details are not described herein again.

The terminal device may determine, based on the RO resource configuration information and the RACH common configuration information, a time-frequency resource used to send the random access request. The terminal device may determine, based on the RACH common configuration information, related information of a random access preamble.

The terminal device may determine a timing advance (timing advance, TA) based on the second position information of the network device, so that uplink advance sending may be performed based on the TA, and uplink time synchronization with a network side is achieved.

Step 502: The network device sends the first system message in the first search space.

Correspondingly, the terminal device determines the first search space based on the SSB, and receives the first system message based on the first search space.

In this application, the network device may send the first system message by using a wide beam. Correspondingly, a coverage area of the first system message is the first coverage area, and an antenna gain of the first system message is the first antenna gain.

In this application, the network device may transmit the first system message by using a small bandwidth. For example, a data transmission bandwidth of the first system message is 20 resource blocks (resource block, RB), 10 RBs, or 5 RBs. The data transmission bandwidth of the first system message may be less than or equal to 20 RBs. In this way, transmission performance of the first system message can be further improved through power aggregation.

In this application, the first system message may support transmission at a low channel coding rate, thereby improving coverage performance. For example, a channel coding rate of the first system message is greater than 0 and less than 0.2344. For example, the channel coding rate of the first system message is 0.03, 0.035, 0.04, or another value.

For example, it is assumed that a maximum quantity of available RBs is 48, one RB includes 12 resource elements (resource element, RE), a quantity of time domain symbols (Symbol) is 10, and a quantity of bits included in the first system message is 200. In this case, the channel coding rate of the first system message is 200 bits/(48*12*10)=200/5760=0.035.

The terminal device may initiate a random access procedure based on the first system message. Specifically, step 503 may be performed.

Step 503: The terminal device sends the random access request to the network device, where a resource corresponding to the random access request is determined based on the first system message.

Correspondingly, the network device receives the random access request.

The random access request may be a random access preamble, and the random access preamble may also be referred to as a preamble (preamble) for short.

Step 504: After receiving the random access request, the network device sends a second system message to the terminal device.

Correspondingly, the terminal device receives the second system message from the network device.

The second system message is used to configure cell-related information, and a cell herein is a cell of the network device. The second system message may also be referred to as area-level system information, or system information block remaining (system information block remaining, SIB-R).

For example, the second system message includes at least one of the following: physical uplink shared channel (physical uplink shared channel, PUSCH) resource configuration information; system information (system information, SI) scheduling information (si-SchedulingInfo); cell selection information (cellSelectionInfo); serving cell configuration common (serving cell config common); cell access-related information (cell access related info); connection establishment failure control (Connection Establishment Failure Control); international mobile subscriber (international mobile subscriber, IMS) emergency support flag (IMS Emergency Support Flag); emergency call (Emergency call, eCall) over IMS support flag (eCall Over IMS Support Flag); UE-timer and constants (UE-Timer and Constants); unified access control (unified access control, UAC) barring information (UAC-Barring Information); and use full resume identity (identity, ID) flag (Use Full Resume ID Flag).

Specific meanings and functions of the foregoing information are not limited in this application. For example, refer to related 3GPP documents. Details are not described herein.

In an implementation, the second system message includes another part of information of the SIB 1. In other words, a part of information of the SIB 1 is located in the first system message, and another part of information of the SIB 1 is located in the second system message.

In this application, the network device may send the second system message by using a narrow beam. Correspondingly, a coverage area of the second system message is a second coverage area, and an antenna gain of the second system message is a second antenna gain.

In an implementation, the first coverage area of the first system message is greater than the second coverage area of the second system message, and/or the first antenna gain of the first system message is less than the second antenna gain of the second system message.

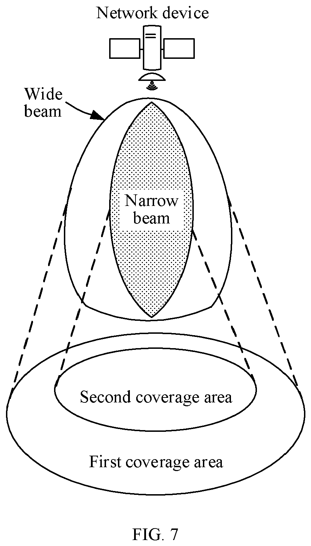

For example, as shown in FIG. 7, the first coverage area corresponding to the wide beam and the second coverage area corresponding to the narrow beam are separately used as examples, and the first coverage area is greater than the second coverage area.

Because a transmit power of the network device has an upper limit, a larger coverage area of a beam indicates a smaller antenna gain, or a smaller coverage area of a beam indicates a larger antenna gain. Therefore, although the second coverage area of the second system message is less than the first coverage area, the second antenna gain of the second system message is greater than the first antenna gain. In this way, a probability that the terminal device successfully receives the second system message can be increased, transmission performance of the second system message can be improved, and initial access performance can be improved.

In this application, a direction for a narrow beam that is specifically used by the network device may be determined based on first position information of the terminal device. For example, the network device may use a narrow beam whose coverage area includes the first position information of the terminal device as the narrow beam for sending the second system message. For example, if the first position information indicates that the terminal device is located in an area 1, the network device may send the second system message by using a narrow beam whose coverage area includes the area 1. In this way, the terminal device can receive the second system message in the area 1. Because each narrow beam corresponds to one coverage area and one antenna gain, it may be understood as that the second coverage area and/or the second antenna gain are/is determined based on the first position information.

The first position information of the terminal device may indicate an area in which the terminal device is located, or may indicate information such as longitude and latitude coordinates of the terminal device. A granularity of a position indicated by the first position information is not limited in this application.

How the network device determines the first position information is not limited in this application. For example, in Implementation 1, the terminal device carries the first position information in the random access request. Alternatively, after sending the random access request, the terminal device sends the first position information to the network device through a physical uplink shared channel (physical uplink shared channel, PUSCH). The terminal device may determine a PUSCH resource through the uplink transmission common configuration in the first system message.

In this implementation, the terminal device reports the first position information in a process of sending the random access request. Therefore, the network side can learn of the first position information in advance, and determine, as early as possible based on the first position information, a narrow beam used for communication with the terminal device, thereby improving a link budget and information transmission performance. In this way, performance of the initial access process is improved.

In Implementation 2, the network device positions the terminal device based on the random access request, to determine the first position information. For example, the network device receives random access requests in parallel by using a plurality of narrow beams, and determines, based on signal strength corresponding to a random access request received by using each narrow beam, a coverage area corresponding to a narrow beam with highest received signal strength as the area in which the terminal device is located, that is, the first position information.

In this implementation, the network device may autonomously position the terminal device, to learn of the first position information, and determine, as early as possible based on the first position information, a narrow beam used for communication with the terminal device, thereby improving a link budget and information transmission performance. In this way, performance of the initial access process is improved.

Further, in the random access procedure, the network device may alternatively send messages such as a random access response (random access response, RAR) and a message 4 to the terminal device by using the narrow beam corresponding to the second system message. For example, the following steps may be further included.

Step 505: The network device sends the random access response to the terminal device.

Correspondingly, the terminal device receives the random access response.

The random access response is a message for responding to the random access request.

The network device may send the random access response by using the narrow beam used to send the second system message. In other words, a coverage area of the random access response is the second coverage area, and/or an antenna gain of the random access response is the second antenna gain.

An execution sequence of step 505 and step 504 is not limited. Step 505 may alternatively be performed before step 504. This is not limited in this application.

In another implementation, step 505 and step 504 are a same step, that is, the second system message includes the random access response. In this way, a signaling procedure can be further simplified, and access latency can be reduced.

Step 506: The terminal device sends a message 3 to the network device.

Correspondingly, the network device receives the message 3.

Step 507: The network device sends the message 4 to the terminal device.

Correspondingly, the terminal device receives the message 4.

The message 4 may also be referred to as a contention resolution message.

The network device may send the message 4 by using the narrow beam used to send the second system message. In other words, a coverage area of the message 4 is the second coverage area, and/or an antenna gain of the message 4 is the second antenna gain.

In this application, step 506 and step 507 are optional steps. For example, if the terminal device initiates two-step random access, step 506 and step 507 may not be performed. In this case, the terminal device completes random access in step 505. For another example, if the terminal device initiates four-step random access, in this application, the initial access procedure may not include step 506 and step 507. It may be understood as that the terminal device completes the initial access procedure after receiving the random access response. Whether to perform step 506 and step 507 is not limited in this application.

In an implementation, after the terminal device performs random access to the network device, the network device may send downlink data to the terminal device by using the narrow beam used to send the second system message. In other words, a coverage area of the downlink data sent by the network device is the second coverage area, and/or an antenna gain of the downlink data sent by the network device is the second antenna gain.

According to the foregoing method, the first coverage area of the first system message sent by the network device before the terminal device performs random access is larger, so that more terminal devices can obtain information required for random access. The second antenna gain of the second system message sent by the terminal device after the terminal device performs random access is larger, so that the transmission performance is improved, and the initial access performance of the terminal device is improved.

In this application, the first system message may alternatively be located in the SSB, and the first system message and the SSB are simultaneously sent. Details are described below.

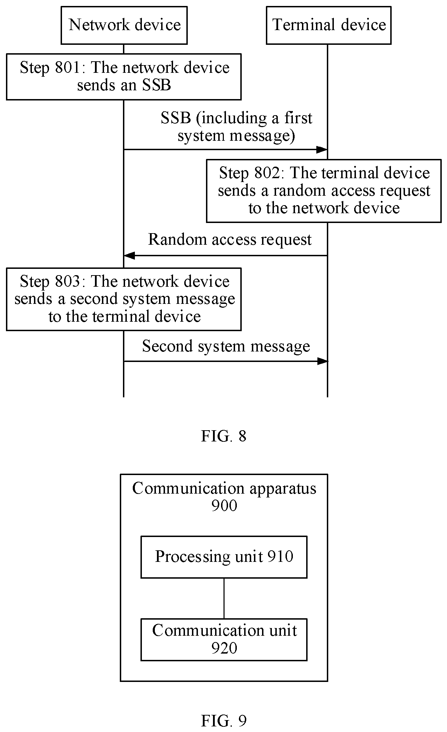

FIG. 8 is a schematic flowchart of a communication method according to an embodiment of this application. The method includes the following steps.

Step 801: A network device sends an SSB.

Correspondingly, a terminal device receives the SSB.

In this application, the network device may send the SSB by using a wide beam, where a coverage area of the SSB may be a first coverage area, and an antenna gain of the SSB may be a first antenna gain.

The SSB includes a PSS, an SSS, and a PBCH. The PBCH carries a MIB and a first system message, or a first system message is located outside the PBCH.

In this implementation, a correspondence exists between a start position of the first system message in time domain and an index of the SSB.

For example, a spacing between the SSB and a first search space may be defined as Y, where Y is an integer greater than 0. Assuming that the index of the SSB is 0, and a start slot of the SSB is S0, a start slot of the first search space is S0+1*Y. If the index of the SSB is 1, and a start slot of the SSB is S1, a start slot of the first search space is S1+1*Y.

In another implementation, a start position of the first system message in time domain is preset or predefined. Specifically, the first search space may be defined as being placed at a fixed time-frequency position. For example, if a synchronization sequence (PSS/SSS) in the SSB occupies first X symbols in one slot, last (14-X) symbols in the slot are occupied by the first system message.

In this application, the first system message is used to configure random access-related information. For specific content of the first system message, refer to the descriptions in step 501. Details are not described herein again.

In this application, the network device may transmit the first system message by using a small bandwidth. For example, a data transmission bandwidth of the first system message is 20 RBs, 10 RBs, or 5 RBs. The data transmission bandwidth of the first system message may be less than or equal to 20 RBs. In this way, power aggregation can be implemented, and transmission performance of the first system message can be further improved.

In this application, the first system message may support transmission at a low channel coding rate, thereby improving coverage performance. For example, a channel coding rate of the first system message is greater than 0 and less than 0.2344. For example, the channel coding rate of the first system message is 0.03, 0.035, 0.04, or another value.

The terminal device may initiate a random access procedure based on the first system message. Specifically, step 802 may be performed.

Step 802: The terminal device sends a random access request to the network device, where a resource corresponding to the random access request is determined based on the first system message in the SSB.

Correspondingly, the network device receives the random access request.

The random access request may be a random access preamble.

Step 803: After receiving the random access request, the network device sends a second system message to the terminal device.

Correspondingly, the terminal device receives the second system message from the network device.

The second system message is used to configure cell-related information, and a cell herein is a cell of the network device. For specific content of the second system message, refer to the descriptions in step 504. Details are not described herein again.

In this application, the network device may send the second system message by using a narrow beam. Correspondingly, a coverage area of the second system message is a second coverage area, and an antenna gain of the second system message is a second antenna gain.

In an implementation, the first coverage area of the first system message is greater than the second coverage area of the second system message, and/or the first antenna gain of the first system message is less than the second antenna gain of the second system message.

In this application, a direction for a narrow beam that is specifically used by the network device may be determined based on first position information of the terminal device. For example, the network device may use a narrow beam whose coverage area includes the first position information of the terminal device as a narrow beam for sending the second system message. Because each narrow beam corresponds to one coverage area and one antenna gain, it may be understood as that the second coverage area and/or the second antenna gain are/is determined based on the first position information.

The first position information of the terminal device may indicate an area in which the terminal device is located, or may indicate information such as longitude and latitude coordinates of the terminal device. A granularity of a position indicated by the first position information is not limited in this application.

How the network device determines the first position information is not limited in this application. For details, refer to the descriptions in step 504. Details are not described herein again.

Further, in the random access procedure, the network device may alternatively send messages such as a random access response and a message 4 to the terminal device by using the narrow beam corresponding to the second system message. For details, refer to the foregoing step 505 to step 507. Details are not described herein again.

In another implementation, the second system message includes a random access response. In this way, a signaling procedure can be further simplified, and access latency can be reduced.

In another implementation, if the terminal device initiates two-step random access, the terminal device no longer sends a message 3, and the network device no longer sends a message 4. In this case, the terminal device completes random access after receiving a random access response.

According to the foregoing method, the network device carries the first system message through the SSB before the terminal device performs random access. The first coverage area of the first system message is larger, so that more terminal devices can obtain information required for random access. The second antenna gain of the second system message sent by the terminal device after the terminal device performs random access is larger, so that transmission performance is improved, and initial access performance of the terminal device is improved.

It may be understood that, to implement functions in the foregoing embodiments, the terminal device or the network device includes corresponding hardware structures and/or software modules for performing the functions. A person skilled in the art should be easily aware that, in combination with the units and the method steps in the examples described in embodiments disclosed in this application, this application can be implemented by hardware or a combination of hardware and computer software. Whether a function is performed by hardware or hardware driven by computer software depends on specific application scenarios and design constraint conditions of the technical solutions.

The following are diagrams of possible structures of communication apparatuses according to embodiments of this application. The communication apparatuses may be configured to implement functions of the terminal device or the network device in the foregoing method embodiments. Therefore, beneficial effects of the foregoing method embodiments can also be implemented. In embodiments of this application, the communication apparatus may be a terminal device, or may be a module (for example, a chip) used in a terminal device; or the communication apparatus may be a network device, or may be a module (for example, a chip) used in a network device.

As shown in FIG. 9, a communication apparatus 900 includes a processing unit 910 and a communication unit 920. The communication apparatus 900 is configured to implement functions of the terminal device or the network device in the method embodiment shown in FIG. 5 or FIG. 8.

When the communication apparatus 900 is configured to implement the functions of the terminal device:

The communication unit is configured to receive a synchronization signal/physical broadcast channel block SSB from a network device.

The processing unit is configured to determine a first search space based on the SSB.

The communication unit is configured to: receive a first system message based on the first search space, where the first system message is used to configure random access-related information; and after sending a random access request, receive a second system message from the network device, where the second system message is used to configure cell-related information, and a resource corresponding to the random access request is determined based on the first system message, where

a first coverage area of the first system message is greater than a second coverage area of the second system message, and/or a first antenna gain of the first system message is less than a second antenna gain of the second system message.

When the communication apparatus 900 is configured to implement the functions of the network device:

The processing unit is configured to: send a synchronization signal/physical broadcast channel block SSB through the communication unit, where the SSB indicates a first search space for a first system message; and send the first system message in the first search space, where the first system message is used to configure random access-related information.

The processing unit is configured to: after receiving a random access request from a terminal device through the communication unit, send a second system message to the terminal device, where the second system message is used to configure cell-related information, and a resource corresponding to the random access request is determined based on the first system message, where

a first coverage area of the first system message is greater than a second coverage area of the second system message, and/or a first antenna gain of the first system message is less than a second antenna gain of the second system message.

When the communication apparatus 900 is configured to implement the functions of the terminal device:

The processing unit is configured to receive a synchronization signal/physical broadcast channel block SSB from a network device through the communication unit, where the SSB includes a first system message, and the first system message is used to configure random access-related information.

The processing unit is configured to: after sending a random access request through the communication unit, receive a second system message from the network device, where the second system message is used to configure cell-related information, and a resource corresponding to the random access request is determined based on the first system message, where

a first coverage area of the SSB is greater than a second coverage area of the second system message, and/or a first antenna gain of the SSB is less than a second antenna gain of the second system message.

When the communication apparatus 900 is configured to implement the functions of the network device:

The processing unit is configured to send a synchronization signal/physical broadcast channel block SSB through the communication unit, where the SSB includes a first system message, and the first system message is used to configure random access-related information.

The processing unit is configured to: after receiving a random access request from a terminal device through the communication unit, send a second system message to the terminal device, where the second system message is used to configure cell-related information, and a resource corresponding to the random access request is determined based on the first system message, where

a first coverage area of the first system message is greater than a second coverage area of the second system message, and/or a first antenna gain of the first system message is less than a second antenna gain of the second system message.

For more detailed descriptions about the processing unit 910 and the communication unit 920, directly refer to related descriptions in the foregoing method embodiments. Details are not described herein.

It should be understood that division of the units in the foregoing apparatus is merely logical function division. In an actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to execute a function of the unit. In addition, all or some of the units may be integrated, or may be implemented independently. The processing element herein may also be referred to as a processor, and may be an integrated circuit having a signal processing capability. During implementation, operations in the foregoing methods or the foregoing units may be implemented through a hardware integrated logic circuit in a processing element, or may be implemented in a form of software invoked by the processing element.

In an example, a unit in any one of the foregoing apparatuses may be one or more integrated circuits configured to implement the foregoing methods, for example, one or more application-specific integrated circuits (application-specific integrated circuit, ASIC), one or more microprocessors (digital signal processor, DSP), one or more field programmable gate arrays (field programmable gate array, FPGA), or a combination of at least two of these forms of integrated circuits. For another example, when the unit in the apparatus may be implemented in a form in which a processing element schedules a program, the processing element may be a processor, for example, a general-purpose central processing unit (central processing unit, CPU) or another processor that can invoke the program. For still another example, the units may be integrated and implemented in a form of a system-on-a-chip (system-on-a-chip, SoC).

The foregoing unit configured for receiving is an interface circuit of the apparatus, and is configured to receive a signal from another apparatus. For example, when the apparatus is implemented in a manner of a chip, the receiving unit is an interface circuit that is of the chip and that is configured to receive a signal from another chip or apparatus. The foregoing unit configured for sending is an interface circuit of the apparatus, and is configured to send a signal to another apparatus. For example, when the apparatus is implemented in the manner of the chip, the sending unit is an interface circuit that is of the chip and that is configured to send a signal to another chip or apparatus.

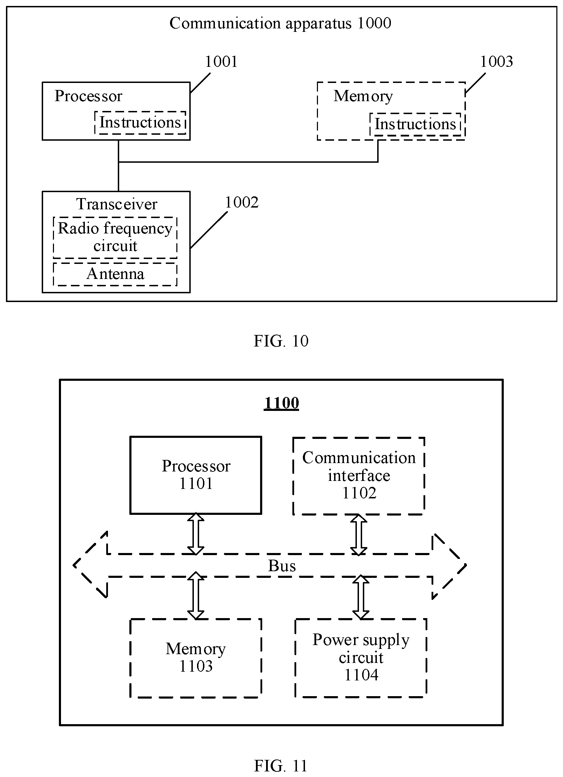

In another possible product form, the terminal device or the network device in embodiments of this application may be implemented through a general bus architecture. For ease of description, FIG. 10 is a diagram of a structure of a communication apparatus 1000 according to an embodiment of this application. The communication apparatus 1000 includes a processor 1001 and a transceiver 1002. The communication apparatus 1000 may be a terminal device, or a chip or a chip system in a terminal device; or the communication apparatus 1000 may be a network device, or a chip or a module in a network device. FIG. 10 shows only main components of the communication apparatus 1000. In addition to the processor 1001 and the transceiver 1002, the communication apparatus 1000 may further include a memory 1003 and an input/output apparatus (not shown in the figure).

Optionally, the processor 1001 is mainly configured to: process a communication protocol and communication data, control the entire communication apparatus, execute a software program, and process data of the software program. The memory 1003 is mainly configured to store the software program and data. The transceiver 1002 may include a radio frequency circuit and an antenna. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user.

Optionally, the processor 1001, the transceiver 1002, and the memory 1003 may be connected through a communication bus.

After the communication apparatus is powered on, the processor 1001 may read the software program in the memory 1003, interpret and execute instructions of the software program, and process the data of the software program. When data needs to be sent wirelessly, the processor 1001 performs baseband processing on the to-be-sent data, and then outputs a baseband signal to the radio frequency circuit. The radio frequency circuit performs radio frequency processing on the baseband signal, and then sends a radio frequency signal to the outside through the antenna in a form of an electromagnetic wave. When data is sent to the communication apparatus, the radio frequency circuit receives a radio frequency signal through the antenna, converts the radio frequency signal into a baseband signal, and outputs the baseband signal to the processor 1001. The processor 1001 converts the baseband signal into data, and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

In some embodiments, in terms of hardware implementation, a person skilled in the art may figure out that the communication apparatus 900 may be in a form of the communication apparatus 1000 shown in FIG. 10.

In an example, a function/an implementation process of the processing unit 910 in FIG. 9 may be implemented through the processor 1001 in the communication apparatus 1000 shown in FIG. 10 by invoking computer-executable instructions stored in the memory 1003. A function/an implementation processes of the communication unit 920 in FIG. 9 may be implemented through the transceiver 1002 in the communication apparatus 1000 shown in FIG. 10.

In another possible product form, the terminal device or the network device in this application may use a composition structure shown in FIG. 11, or include components shown in FIG. 11. FIG. 11 is a diagram of composition of a communication apparatus 1100 according to this application.

As shown in FIG. 11, the communication apparatus 1100 includes at least one processor 1101. Optionally, the communication apparatus further includes a communication interface 1102.

When related program instructions are executed in the at least one processor 1101, the communication apparatus 1100 may be enabled to implement the method provided in any one of the foregoing embodiments and any possible design of the method. Alternatively, the processor 1101 is configured to implement, through a logic circuit or by executing code instructions, the method provided in any one of the foregoing embodiments and any possible design of the method.

The communication interface 1102 may be configured to receive the program instructions and transmit the program instructions to the processor. Alternatively, the communication interface 1102 may be configured to perform communication interaction between the communication apparatus 1100 and another communication device, for example, exchange control signaling and/or service data. For example, the communication interface 1102 may be configured to receive a signal from an apparatus other than the communication apparatus 1100, and transmit the signal to the processor 1101, or send a signal from the processor 1101 to a communication apparatus other than the communication apparatus 1100.

Optionally, the communication interface 1102 may be a code and/or data read/write interface circuit, or the communication interface 1102 may be a signal transmission interface circuit between a communication processor and a transceiver, or may be a pin of a chip.

Optionally, the communication apparatus 1100 may further include at least one memory 1103, and the memory 1103 may be configured to store related program instructions and/or data that are/is required. It should be noted that the memory 1103 may exist independently of the processor 1101, or may be integrated with the processor 1101. The memory 1103 may be located inside the communication apparatus 1100, or may be located outside the communication apparatus 1100. This is not limited.

Optionally, the communication apparatus 1100 may further include a power supply circuit 1104, and the power supply circuit 1104 may be configured to supply power to the processor 1101. The power supply circuit 1104 may be located in a same chip as the processor 1101, or may be located in a chip other than a chip in which the processor 1101 is located.

Optionally, the communication apparatus 1100 may further include a bus, and parts of the communication apparatus 1100 may be interconnected through the bus.

In some embodiments, in terms of hardware implementation, a person skilled in the art may figure out that the communication apparatus 900 shown in FIG. 9 may be in a form of the communication apparatus 1100 shown in FIG. 11.

In an example, a function/an implementation process of the processing unit 910 in FIG. 9 may be implemented through the processor 1101 in the communication apparatus 1100 shown in FIG. 11 by invoking computer-executable instructions stored in the memory 1103. A function/an implementation process of the communication unit 920 in FIG. 9 may be implemented through the communication interface 1102 in the communication apparatus 1100 shown in FIG. 11.

It should be noted that the structure shown in FIG. 11 does not constitute a specific limitation on the terminal device or the network device. For example, in some other embodiments of this application, the terminal device or the network device may include more or fewer components than those shown in the figure, or combine some components, or split some components, or have different component arrangements. The components shown in the figure may be implemented by hardware, software, or a combination of software and hardware.

It may be understood that, the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or may be any regular processor.

The method steps in embodiments of this application may be implemented by hardware, or may be implemented by a processor by executing software instructions. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a base station or a terminal. Certainly, the processor and the storage medium may exist in the base station or the terminal as discrete components.

All or some of the foregoing embodiments may be implemented by software, hardware, firmware, or any combination thereof. When embodiments are implemented by software, all or some of embodiments may be implemented in a form of a computer program product. The computer program product includes one or more computer programs or instructions. When the computer program or the instructions are loaded and executed on a computer, all or some of procedures or functions in embodiments of this application are performed. The computer may be a general-purpose computer, a dedicated computer, a computer network, a network device, user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium that can be accessible by the computer, or a data storage device, like a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions between different embodiments are consistent and may be mutually referenced, and technical features in different embodiments may be combined into a new embodiment based on an internal logical relationship thereof.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

These computer program instructions may be stored in a computer-readable memory that can instruct the computer or any other programmable data processing device to operate in a specific manner, so that the instructions stored in the computer-readable memory generate an artifact that includes an instruction apparatus. The instruction apparatus implements a specific function in one or more procedures in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the following claims of this application and their equivalent technologies.

**Claims**

1. A communication method, comprising:

   receiving a synchronization signal/physical broadcast channel block SSB from a network device;
   determining a first search space based on the SSB, and receiving a first system message based on the first search space, wherein the first system message is used to configure random access-related information; and
   after sending a random access request, receiving a second system message from the network device, wherein the second system message is used to configure cell-related information, and a resource corresponding to the random access request is determined based on the first system message, wherein
   a first coverage area of the first system message is greater than a second coverage area of the second system message, and/or a first antenna gain of the first system message is less than a second antenna gain of the second system message.

2. The method according to claim 1, wherein the second system message comprises at least one of the following: physical uplink shared channel PUSCH resource configuration information; system information SI scheduling information; or cell selection information.

3. The method according to claim 1 or 2, wherein the first system message comprises at least one of the following:

   random access channel occasion RO resource configuration information;
   second position information of the network device;
   uplink transmission common configuration;
   RACH common configuration information;
   downlink transmission common configuration; or
   SSB-related information, wherein the SSB-related information comprises at least one of the following: a quantity of SSBs, an SSB periodicity, or an SSB pattern.

4. The method according to any one of claims 1 to 3, wherein before receiving the second system message, the method further comprises:
   sending first position information of the terminal device to the network device.

5. The method according to claim 4, wherein the second coverage area and/or the second antenna gain are/is determined based on the first position information.

6. The method according to claim 4 or 5, further comprising:

   receiving a random access response from the network device, wherein
   a coverage area of the random access response is the second coverage area, and/or an antenna gain of the random access response is the second antenna gain.

7. The method according to claim 6, further comprising:

   sending a message 3 to the network device; and
   receiving a message 4 from the network device, wherein
   a coverage area of the message 4 is the second coverage area, and/or an antenna gain of the message 4 is the second antenna gain.

8. The method according to any one of claims 1 to 7, wherein a start position of the first search space for the first system message in time domain is preset or predefined.

9. The method according to any one of claims 1 to 7, wherein a correspondence exists between a start position of the first search space for the first system message in time domain and an index of the SSB.

10. The method according to any one of claims 1 to 9, wherein a data transmission bandwidth of the first system message is less than 20 resource blocks.

11. The method according to any one of claims 1 to 10, wherein a channel coding rate of the first system message is greater than 0 and less than 0.2344.

12. A communication method, comprising:

   sending a synchronization signal/physical broadcast channel block SSB, wherein the SSB indicates a first search space for a first system message;
   sending the first system message in the first search space, wherein the first system message is used to configure random access-related information; and
   after receiving a random access request from a terminal device, sending a second system message to the terminal device, wherein the second system message is used to configure cell-related information, and a resource corresponding to the random access request is determined based on the first system message, wherein
   a first coverage area of the first system message is greater than a second coverage area of the second system message, and/or a first antenna gain of the first system message is less than a second antenna gain of the second system message.

13. The method according to claim 12, wherein the second system message comprises at least one of the following: physical uplink shared channel PUSCH resource configuration information; system information SI scheduling information; or cell selection information.

14. The method according to claim 12 or 13, wherein the first system message comprises at least one of the following:

   random access channel occasion RO resource configuration information;
   second position information of a network device;
   uplink transmission common configuration;
   RACH common configuration information;
   downlink transmission common configuration; or
   SSB-related information, wherein the SSB-related information comprises at least one of the following: a quantity of SSBs, an SSB periodicity, or an SSB pattern.

15. The method according to any one of claims 12 to 14, wherein before sending the second system message, the method further comprises:
   receiving first position information from the terminal device.

16. The method according to any one of claims 12 to 15, wherein before sending the second system message, the method further comprises:
   positioning the terminal device based on the random access request, to determine the first position information of the terminal device.

17. The method according to claim 15 or 16, wherein the second coverage area and/or the second antenna gain are/is determined based on the first position information.

18. A communication method, comprising:

   receiving a synchronization signal/physical broadcast channel block SSB from a network device, wherein the SSB comprises a first system message, and the first system message is used to configure random access-related information; and
   after sending a random access request, receiving a second system message from the network device, wherein the second system message is used to configure cell-related information, and a resource corresponding to the random access request is determined based on the first system message, wherein
   a first coverage area of the SSB is greater than a second coverage area of the second system message, and/or a first antenna gain of the SSB is less than a second antenna gain of the second system message.

19. A communication method, comprising:

   sending a synchronization signal/physical broadcast channel block SSB, wherein the SSB comprises a first system message, and the first system message is used to configure random access-related information; and
   after receiving a random access request from a terminal device, sending a second system message to the terminal device, wherein the second system message is used to configure cell-related information, and a resource corresponding to the random access request is determined based on the first system message, wherein
   a first coverage area of the first system message is greater than a second coverage area of the second system message, and/or a first antenna gain of the first system message is less than a second antenna gain of the second system message.

20. A communication apparatus, comprising:

   a communication unit, configured to receive a synchronization signal/physical broadcast channel block SSB from a network device; and
   a processing unit, configured to determine a first search space based on the SSB, wherein
   the communication unit is configured to: receive a first system message based on the first search space, wherein the first system message is used to configure random access-related information; and after sending a random access request, receive a second system message from the network device, wherein the second system message is used to configure cell-related information, and a resource corresponding to the random access request is determined based on the first system message, wherein
   a first coverage area of the first system message is greater than a second coverage area of the second system message, and/or a first antenna gain of the first system message is less than a second antenna gain of the second system message.

21. A communication apparatus, comprising:

a processing unit, configured to: send a synchronization signal/physical broadcast channel block SSB through a communication unit, wherein the SSB indicates a first search space for a first system message; and send the first system message in the first search space, wherein the first system message is used to configure random access-related information, wherein

the processing unit is configured to: after receiving a random access request from a terminal device through the communication unit, send a second system message to the terminal device, wherein the second system message is used to configure cell-related information, and a resource corresponding to the random access request is determined based on the first system message; and

a first coverage area of the first system message is greater than a second coverage area of the second system message, and/or a first antenna gain of the first system message is less than a second antenna gain of the second system message.

22. A communication apparatus, comprising:

a processing unit, configured to receive a synchronization signal/physical broadcast channel block SSB from a network device through a communication unit, wherein the SSB comprises a first system message, and the first system message is used to configure random access-related information, wherein

the processing unit is configured to: after sending a random access request through the communication unit, receive a second system message from the network device, wherein the second system message is used to configure cell-related information, and a resource corresponding to the random access request is determined based on the first system message; and

a first coverage area of the SSB is greater than a second coverage area of the second system message, and/or a first antenna gain of the SSB is less than a second antenna gain of the second system message.

23. A communication apparatus, comprising:

a processing unit, configured to send a synchronization signal/physical broadcast channel block SSB through a communication unit, wherein the SSB comprises a first system message, and the first system message is used to configure random access-related information, wherein

the processing unit is configured to: after receiving a random access request from a terminal device through the communication unit, send a second system message to the terminal device, wherein the second system message is used to configure cell-related information, and a resource corresponding to the random access request is determined based on the first system message; and

a first coverage area of the first system message is greater than a second coverage area of the second system message, and/or a first antenna gain of the first system message is less than a second antenna gain of the second system message.

24. A communication apparatus, comprising a processor and a memory, wherein

the processor is configured to execute a computer program or instructions stored in the memory, to enable the communication apparatus to implement the method according to any one of claims 1 to 19.

25. A computer-readable storage medium, storing a computer program or instructions, wherein when the computer program or the instructions are run on a computer, the computer is enabled to implement the method according to any one of claims 1 to 19.

26. A chip, comprising a processor, wherein the processor is coupled to a memory, and is configured to execute a computer program or instructions stored in the memory, to enable the chip to implement the method according to any one of claims 1 to 19.

27. A computer program product, wherein when a computer reads and executes the computer program product, the method according to any one of claims 1 to 19 is enabled to be performed.

FIG. 1

FIG. 2

RAN

Base
station

UE

Uu

CN

NG

Satellite

NTN gateway

RRU

FIG. 3

Satellite

Feeder
link

Service
link

Terminal
device

Gateway

Beam or cell

FIG. 4

```
┌─────────────────────┐                    ┌─────────────────────┐
│   Network device    │                    │   Terminal device   │
└──────────┬──────────┘                    └──────────┬──────────┘
┌──────────┴───────────────────┐                      │
│ Step 501: The network device │                      │
│ sends an SSB                 │                      │
└──────────┬───────────────────┘          SSB         │
           ├─────────────────────────────────────────>│
┌──────────┴───────────────────┐                      │
│ Step 502: The network device │                      │
│ sends a first system message │                      │
│ in a first search space      │                      │
└──────────┬───────────────────┘  First system message│
           ├─────────────────────────────────────────>│
           │                      ┌───────────────────┴──────────┐
           │                      │ Step 503: The terminal device│
           │                      │ sends a random access request│
           │                      │ to the network device        │
           │   Random access request └───────────────────┬───────┘
           │<─────────────────────────────────────────────┤
┌──────────┴───────────────────┐                      │
│ Step 504: The network device │                      │
│ sends a second system message│                      │
│ to the terminal device       │                      │
└──────────┬───────────────────┘ Second system message│
           ├─────────────────────────────────────────>│
┌──────────┴───────────────────┐                      │
│ Step 505: The network device │                      │
│ sends a random access response│                     │
│ to the terminal device       │                      │
└──────────┬───────────────────┘ Random access response│
           ├─────────────────────────────────────────>│
           │                      ┌───────────────────┴──────────┐
           │                      │ Step 506: The terminal device│
           │                      │ sends a message 3 to the     │
           │                      │ network device               │
           │      Message 3          └───────────────────┬───────┘
           │<─────────────────────────────────────────────┤
┌──────────┴───────────────────┐                      │
│ Step 507: The network device │                      │
│ sends a message 4 to the     │                      │
│ terminal device              │                      │
└──────────┬───────────────────┘      Message 4        │
           ├─────────────────────────────────────────>│
           │                                           │
```

FIG. 5

| 15 | 31 | 47 | 63 | 79 | 95 | 111 | 127 | 143 | 159 | 175 | 191 | 207 | 223 | 239 | 255 |
|----|----|----|----|----|----|-----|-----|-----|-----|-----|-----|-----|-----|-----|-----|
| 14 | 30 | 46 | 62 | 78 | 94 | 110 | 126 | 142 | 158 | 174 | 190 | 206 | 222 | 238 | 254 |
| 13 | 29 | 45 | 61 | 77 | 93 | 109 | 125 | 141 | 157 | 173 | 189 | 205 | 221 | 237 | 253 |
| 12 | 28 | 44 | 60 | 76 | 92 | 108 | 124 | 140 | 156 | 172 | 188 | 204 | 220 | 236 | 252 |
| 11 | 27 | 43 | 59 | 75 | 91 | 107 | 123 | 139 | 155 | 171 | 187 | 203 | 219 | 235 | 251 |
| 10 | 26 | 42 | 58 | 74 | 90 | 106 | 122 | 138 | 154 | 170 | 186 | 202 | 218 | 234 | 250 |
| 9  | 25 | 41 | 57 | 73 | 89 | 105 | 121 | 137 | 153 | 169 | 185 | 201 | 217 | 233 | 249 |
| 8  | 24 | 40 | 56 | 72 | 88 | 104 | 120 | 136 | 152 | 168 | 184 | 200 | 216 | 232 | 248 |
| 7  | 23 | 39 | 55 | 71 | 87 | 103 | 119 | 135 | 151 | 167 | 183 | 199 | 215 | 231 | 247 |
| 6  | 22 | 38 | 54 | 70 | 86 | 102 | 118 | 134 | 150 | 166 | 182 | 198 | 214 | 230 | 246 |
| 5  | 21 | 37 | 53 | 69 | 85 | 101 | 117 | 133 | 149 | 165 | 181 | 197 | 213 | 229 | 245 |
| 4  | 20 | 36 | 52 | 68 | 84 | 100 | 116 | 132 | 148 | 164 | 180 | 196 | 212 | 228 | 244 |
| 3  | 19 | 35 | 51 | 67 | 83 | 99  | 115 | 131 | 147 | 163 | 179 | 195 | 211 | 227 | 243 |
| 2  | 18 | 34 | 50 | 66 | 82 | 98  | 114 | 130 | 146 | 162 | 178 | 194 | 210 | 226 | 242 |
| 1  | 17 | 33 | 49 | 65 | 81 | 97  | 113 | 129 | 145 | 161 | 177 | 193 | 209 | 225 | 241 |
| 0  | 16 | 32 | 48 | 64 | 80 | 96  | 112 | 128 | 144 | 160 | 176 | 192 | 208 | 224 | 240 |

FIG. 6

FIG. 7

```
┌─────────────────┐                    ┌─────────────────┐
│  Network device │                    │ Terminal device │
└────────┬────────┘                    └────────┬────────┘
┌────────┴─────────────────┐                    │
│ Step 801: The network device                  │
│    sends an SSB          │                     │
└────────┬─────────────────┘                     │
         │    SSB (including a first             │
         │      system message)                  │
         │─────────────────────────────────────▶│
         │                    ┌──────────────────┴──────────┐
         │                    │ Step 802: The terminal device│
         │                    │ sends a random access request│
         │                    │    to the network device     │
         │                    └──────────────────┬──────────┘
         │       Random access request           │
         │◀──────────────────────────────────────│
┌────────┴──────────────────┐                    │
│ Step 803: The network device                   │
│ sends a second system message                  │
│    to the terminal device │                    │
└────────┬──────────────────┘                    │
         │       Second system message           │
         │─────────────────────────────────────▶│
         │                                       │
```

FIG. 8

```
┌────────────────────────────────┐
│  Communication apparatus        │
│            900                  │
│    ┌────────────────────────┐   │
│    │  Processing unit 910   │   │
│    └───────────┬────────────┘   │
│                │                │
│    ┌───────────┴────────────┐   │
│    │  Communication unit     │   │
│    │          920            │   │
│    └────────────────────────┘   │
└────────────────────────────────┘
```

FIG. 9

Communication apparatus 1000

1001       1003

Processor
Instructions

Memory
Instructions

Transceiver    1002
Radio frequency circuit
Antenna

FIG. 10

**1100**

Processor
1101

Communication interface
1102

Bus

Memory
1103

Power supply circuit
1104

FIG. 11

# EP 4 765 998 A1

<table>
<tr><td colspan="2" style="text-align:center">INTERNATIONAL SEARCH REPORT</td><td>International application No.<br><br>**PCT/CN2024/115900**</td></tr>
</table>

**A. CLASSIFICATION OF SUBJECT MATTER**

H04W74/00(2009.01)i

According to International Patent Classification (IPC) or to both national classification and IPC

**B. FIELDS SEARCHED**

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

VCN: DWPI; ENTXT; 3GPP: 非地面网络, 宽波束, 窄波束, 同步信号块, 系统消息, 随机接入, 天线增益, 大, 小, wide, beam, narrow, ssb, SIB, SIB1, SIB19, random, access, NTN

**C. DOCUMENTS CONSIDERED TO BE RELEVANT**

| Category* | Citation of document, with indication, where appropriate, of the relevant passages | Relevant to claim No. |
|---|---|---|
| A | US 2023262677 A1 (HUAWEI TECHNOLOGIES CO., LTD.) 17 August 2023 (2023-08-17) description, paragraphs 185-211, and figure 9 | 1-27 |
| A | CN 114173414 A (SAMSUNG ELECTRONICS CO., LTD.) 11 March 2022 (2022-03-11) entire document | 1-27 |
| A | CN 116073879 A (HUAWEI TECHNOLOGIES CO., LTD.) 05 May 2023 (2023-05-05) entire document | 1-27 |
| A | MEDIATEK INC. "Summary #2 of 8.4.4 Other Aspects of NR-NTN" *3GPP TSG RAN WG1 Meeting #103e. R1-2009487,* 13 November 2020 (2020-11-13), entire document | 1-27 |

☐ Further documents are listed in the continuation of Box C.     ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **28 November 2024** | **04 December 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**EP 4 765 998 A1**

**INTERNATIONAL SEARCH REPORT**
**Information on patent family members**

International application No.

**PCT/CN2024/115900**

| Patent document cited in search report | | | Publication date (day/month/year) | Patent family member(s) | | | Publication date (day/month/year) |
|---|---|---|---|---|---|---|---|
| US | 2023262677 | A1 | 17 August 2023 | EP | 4207906 | A1 | 05 July 2023 |
| | | | | WO | 2022078176 | A1 | 21 April 2022 |
| | | | | CN | 114375040 | A | 19 April 2022 |
| CN | 114173414 | A | 11 March 2022 | KR | 20220034009 | A | 17 March 2022 |
| | | | | EP | 3968539 | A2 | 16 March 2022 |
| | | | | US | 2022078848 | A1 | 10 March 2022 |
| | | | | TW | 202211716 | A | 16 March 2022 |
| CN | 116073879 | A | 05 May 2023 | WO | 2023071802 | A1 | 04 May 2023 |
| | | | | US | 2024291557 | A1 | 29 August 2024 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311204315